# EUROPÄISCHE PATENTSCHRIFT

(11) **EP 2 328 942 B1**
(45) Veröffentlichungstag und Bekanntmachung des Hinweises auf die Patenterteilung: **01.02.2012**
(21) Anmeldenummer: 09780939.6
(22) Anmeldetag: 22.07.2009
(51) Int. Cl.: C08F 20/12, C08K 13/04, C08L 33/12, C08F 2/44

(54) **AUSHÄRTBARE GIESSMASSE ZUR HERSTELLUNG VON KUNSTSTOFFFORMTEILEN**
CURABLE CASTING COMPOUND FOR THE PRODUCTION OF PLASTIC MOLDED PARTS
MASSE DE COULÉE DURCISSABLE POUR LA FABRICATION DE PIÈCES MOULÉES EN MATIÈRE PLASTIQUE

(30) Priorität: 05.09.2008 DE 102008046569
(43) Veröffentlichungstag der Anmeldung: 08.06.2011
(73) Patentinhaber: BLANCO GmbH + Co KG, 75038 Oberderdingen (DE)
(72) Erfinder: HAJEK, Andreas, 76356 Weingarten (DE); WESSEL, Jürgen, 74536 Rosengarten (DE)
(74) Vertreter: Hoeger, Stellrecht & Partner Patentanwälte
(86) Internationale Anmeldenummer: PCT/EP2009/059441
(87) Internationale Veröffentlichungsnummer: WO 2010/025995

(56) Entgegenhaltungen:
- EP-A- 0 653 475
- EP-A- 1 207 180
- WO-A-99/47594
- DATABASE WPI Week 200235 Thomson Scientific, London, GB; AN 2002-310065 XP002552468 -& JP 2001 335382 A (MRC DU PONT KK) 4. Dezember 2001 (2001-12-04)

## Beschreibung

Die Erfindung betrifft eine aushärtbare Gießmasse zur Herstellung von Kunststoffformteilen, umfassend ein Bindemittelmaterial und ein Füllstoffmaterial, wobei das Füllstoffmaterial an der Gießmasse einen Anteil von ca. 40 bis ca. 85 Gew.-% aufweist und massive granulare mineralische Partikel umfasst.

Aushärtbare Gießmassen werden in großem Umfang zur Herstellung von Kunststoffformteilen für den Sanitär- oder Küchenbereich, wie beispielsweise Küchenspülen, Arbeitsplatten, Badewannen, Waschbecken etc., verwendet.

Die eingesetzten Gießmassen beinhalten dabei üblicherweise ein Bindemittelmaterial und zur Verbesserung der mechanischen Eigenschaften der Kunststoffformteile ein Füllstoffmaterial.

Weit verbreitet sind Kunststoffformteile, deren Sichtseiten strukturiert sind. Eine Strukturierung erhöht die optische Attraktivität der Sichtseiten und führt dazu, dass Beschädigungen, wie z.B. Kratzer, auf ihnen in geringerem Ausmaß sichtbar sind als auf glatten Oberflächen. Besonders beliebt sind Kunststoffformteile mit strukturierten Granitdekoroberflächen, die in ihrem Aussehen dem natürlichen Granit so weit wie möglich angeglichen sind.

In der DE 38 32 351 A1 wird vorgeschlagen, für die Herstellung von Kunststoffformteilen mit einer strukturierten Sichtseite eine Gießmasse zu verwenden, welche grobe mineralische Füllstoffpartikel mit einer Größe von ca. 0,1 mm bis ca. 0,2 mm umfasst.

In der WO 00/28872 ist eine aushärtbare Gießmasse beschrieben, mit der Armaturenteile mit einer strukturierten Granitdekoroberfläche hergestellt werden können.

Die WO 99/47594 A offenbart eine Gießmasse umfassend einen auf Methylmethacrylat basierenden Sirup sowie bis zu 85% eines organischen Füllstoffes, bezogen auf die Gießmasse, sowie deformierbare, treibmittelgefüllte Mikrohohlkügelchen mit einer in Methylmethacrylat im Wesentlichen unlöslichen Kunststoffwandung, wobei der Volumenanteil der Mikrohohlkügelchen am Gesamtvolumen der Gießmasse im Bereich von 5 bis 50 Vol.-% liegt.

In der JP 2001-335382 wird eine polymerisierbare Zusammensetzung zur Herstellung von künstlichem Marmor beschrieben, umfassend 10 bis 65 Gew.% polymerisierbare Komponenten mit Methylmethacrylat als Hauptkomponente, 30 bis 85 Gew.% eines anorganischen Füllstoffs und 0,1 bis 10 Gew.% eines organischen Hohlfüllstoffs mit einer Dichte von 0,05 bis 0,7 und einer mittleren Partikelgröße von 10 bis 300 µm.

Die strukturierten Sichtseiten der unter Verwendung herkömmlicher Gießmassen erhaltenen Kunststoffformteile sind allerdings unter dem Gesichtspunkt der Reinigbarkeit nicht völlig gleichwertig zu vollständig glatten Oberflächen.

Aufgabe der vorliegenden Erfindung ist es, eine aushärtbare Gießmasse vorzuschlagen, mit der Kunststoffformteile, welche eine strukturierte Oberfläche aufweisen, mit einer verbesserten Reinigbarkeit hergestellt werden können.

Diese Aufgabe wird bei einer aushärtbaren Gießmasse der eingangs beschriebenen Art erfindungsgemäß dadurch gelöst, dass das Füllstoffmaterial zwei oder mehr Füllstofffraktionen umfasst, wobei eine erste Füllstofffraktion aus massiven granularen mineralischen Partikeln besteht und eine zweite Füllstofffraktion aus formstabilen Mikrohohlkugeln aus einem Silikatmaterial besteht, und wobei der Anteil der zweiten Füllstofffraktion an der Gießmasse ca. 1 Vol.-% oder mehr beträgt.

Durch den Gehalt der Gießmasse an massiven granularen mineralischen Partikeln der ersten Füllstofffraktion ist sichergestellt, dass mit ihr Kunststoffformteile mit einer strukturierten Oberfläche, beispielswiese einer Granitdekoroberfläche, erhalten werden können.

Überraschenderweise wurde festgestellt, dass bei einem Zusatz einer zweiten Füllstofffraktion aus formstabilen Mikrohohlkugeln zu der Gießmasse eine deutliche Verbesserung der Reinigbarkeit der Sichtseite erzielt wird. Insbesondere sind die im Küchenbereich üblicherweise auftretenden Verunreinigungen durch Eiweiße, Stärke, Fette etc., leichter entfernbar. Trotzdem bleibt die Strukturierung der Sichtseite erhalten.

Das Aussehen der Sichtseite bleibt deshalb durch den Zusatz der Mikrohohlkugeln in der Regel im Wesentlichen unverändert, so dass die mit der Strukturierung verbundene optische Attraktivität, beispielsweise die Ähnlichkeit einer Granitdekoroberfläche mit natürlichem Granit, erhalten bleibt.

Die Verwendung massiver Mikrokugeln in aushärtbaren Gießmassen ist bereits aus der EP 1 672 012 A1 bekannt. Dort wird vorgeschlagen, einer Gießmasse mit Bindemittelkomponenten und einer ersten Füllstoffkomponente Mikroglaskugeln, deren Partikelgröße kleiner ist als die der ersten Füllstoffkomponente, als zweite Füllstoffkomponente zuzusetzen, um eine optimierte Packungsdichte des Füllstoffgemisches zu erhalten, so dass der Anteil der Bindemittelkomponenten an der Gießmasse minimiert werden kann.

Bezüglich einer Verbesserung der Reinigbarkeit der Sichtseiten von Kunststoffformteilen werden bei einer Verwendung massiver Mikrokugeln allerdings deutlich schlechtere Ergebnisse erzielt als bei dem erfindungsgemäßen Einsatz von Mikrohohlkugeln.

Aus der WO 99/47594 ist die Verwendung deformierbarer, treibmittelgefüllter Mikrohohlkügelchen in aushärtbaren Gießmassen bekannt. Durch eine Expansion der deformierbaren Mikrohohlkügelchen kann ein beim Abbinden des Bindemittels der Gießmasse auftretender Schrumpf an der Rückseite, d.h. der der Sichtseite abgewandten Seite, kompensiert werden.

Eine Beeinflussung der Eigenschaften der Sichtseite eines Kunststoffformteils ist mit diesen deformierbaren Mikrohohlkugeln allerdings kaum erreichbar, da sie sich innerhalb einer in eine Gießform gegebenen Gießmasse in oberen Bereichen ansammeln. In einer zur Herstellung eines Kunststoffformteils dienenden Gießform sind in der Regel die Abschnitte, in denen eine Sichtseite des Formteils ausgebildet werden soll, unten und die Abschnitte, in denen eine Rückseite hergestellt werden soll, oben angeordnet. Dadurch ist sichergestellt, dass die zur Erzeugung der Sichtseite vorgesehenen Abschnitte auch bei einem möglichen Schrumpfen des Bindemittels beim Härten stets mit Gießmasse gefüllt bleiben, so dass eine mängelfreie Sichtseite erhalten wird. Die Ansammlung der deformierbaren Mikrohohlkügelchen in oberen Bereichen der Gießform führt daher dazu, dass sie an der Sichtseite in so niedriger Konzentration vorliegen, dass sie deren Eigenschaften nicht beeinflussen können.

Erfindungsgemäß wird eine merklich verbesserte Reinigbarkeit der Sichtseite eines Kunststoffformteils bereits bei einem Anteil der aus den Mikrohohlkugeln bestehenden zweiten Füllstofffraktion an der Gießmasse von nur ca. 1 Vol.-% erzielt.

Signifikante Verbesserungen der Reinigbarkeit sind insbesondere festzustellen, wenn der Anteil der zweiten Füllstofffraktion an der Gießmasse 5 Vol.-% oder mehr beträgt.

Um eine gute Verarbeitbarkeit der Gießmasse sicherzustellen, beträgt der Anteil der zweiten Füllstofffraktion an der Gießmasse weiterhin bevorzugt 30 Vol.-% oder weniger.

Günstig ist es insbesondere, wenn der mittlere Durchmesser der Mikrohohlkugeln ca. 5 bis ca. 30 % der mittleren Partikelgröße der Partikel der ersten Füllstofffraktion beträgt.

In der ersten Füllstofffraktion werden vorzugsweise granulare Partikel mit einer mittleren Partikelgröße von ca. 50 µm bis ca. 1.000 µm verwendet, da diese besonders gut dazu geeignet sind, eine im Aussehen attraktive Strukturierung der Sichtflächen eines Kunststoffformteils, wie beispielsweise eine Granitdekor-Optik, zu erzielen.

Die formstabilen Mikrohohlkugeln weisen bevorzugt einen mittleren Durchmesser von ca. 5 bis ca. 300 µm, weiter bevorzugt von ca. 25 bis ca. 150 µm, besonders bevorzugt von ca. 50 bis ca. 100 µm auf.

Unter Mikrohohlkugeln im Sinne der vorliegenden Erfindung sind typischerweise Mikrokugeln mit einem eingeschlossenen Hohlraumvolumen von ca.
20 Vol.-% des Kugelvolumens oder mehr zu verstehen. Die Mikrohohlkugeln können dabei verschiedene Strukturen aufweisen. Beispielsweise können sie jeweils einen zusammenhängenden, von einer Wand umschlossenen Hohlraum aufweisen. Sie können aber auch aus einem porösen Material bestehen, das eine Vielzahl von Hohlräumen aufweist.

Vorteilhaft ist es, wenn die spezifische Dichte der Mikrohohlkugeln von ca. 0,5 bis ca. 1 g/cm³ beträgt. Mikrohohlkugeln einer derartigen Dichte bleiben in der Gießmasse, deren Bindemittelmaterial üblicherweise eine Dichte von ca. 0,9 bis ca. 1,2 g/cm³ aufweist, nach einem Überführen der Gießmasse in eine Gießform zur Herstellung eines Formteils im Wesentlichen gleichmäßig verteilt.

Eine spezifische Dichte der formstabilen Mikrohohlkugeln in diesem Bereich ist hoch genug, dass ein Aufsteigen der Mikrohohlkugeln in oben angeordnete Bereiche der Gießmasse, also zu der Rückseite des Formteils hin, vermieden wird. Daher ist eine ausreichende Konzentration an einer unten angeordneten Sichtseite sichergestellt.

Andererseits ist eine in diesem Bereich liegende spezifische Dichte der formstabilen Mikrohohlkugeln nicht so hoch, dass ein Absinken der Mikrohohlkugeln in innerhalb der Gießform unten angeordnete Bereiche der Gießmasse auftreten würde. Bei der Herstellung von Kunststoffformteilen, die mehrere in unterschiedliche Richtungen wiesende Sichtflächen aufweisen, ist daher gewährleistet, dass nicht nur an einer innerhalb der Gießform nach unten weisenden, sondern auch an in andere Richtungen weisenden Sichtflächen eine im Wesentlichen vergleichbare Konzentration von Mikrohohlkugeln erzielt wird, so dass für jede dieser Oberflächen eine verbesserte Reinigbarkeit erhalten wird.

Als geeignet zur Verbesserung der Reinigbarkeit eines Kunststoffformteils haben sich Mikrohohlkugeln erwiesen, welche aus einem Silikatmaterial hergestellt sind.

Insbesondere wurde gefunden, dass bei den erfindungsgemäß verwendeten formstabilen Mikrohohlkugeln eine Silanisierung, wie sie bei Füllstoffen häufig vorgenommen wird, um einen stabilen Verbund der Füllstoffe mit einem Bindemittel zu ermöglichen, überraschenderweise nicht notwendig ist.

Die Wahl des Bindemittelmaterials der Gießmasse unterliegt keinen besonderen Beschränkungen. Beispielsweise kann das Bindemittelmaterial eine flüssige monomere Acrylatkomponente umfassen, welche bei der Herstellung eines Kunststoffformteils unter Härtung zu einem Polyacrylat polymerisierbar ist. Zur Erhöhung der Viskosität der Gießmasse kann der monomeren Acrylatkomponente ein Anteil einer präpolymerisierten Acrylatkomponente zugesetzt werden, beispielsweise kann zu dem Monomer Methylmethacrylat (MMA) präpolymerisiertes Polymethylmethacrylat (PMMA) zugegeben werden.

Die Auswahl des Materials der Partikel der ersten Füllstofffraktion ist im Allgemeinen unkritisch. Beispielsweise können silikatische Füllstoffmaterialien, etwa Glas, Quarz, Cristobalit oder Tridymit, oder Aluminiumhydroxid-basierende Füllstoffmaterialien wie Aluminiumtrihydroxid (ATH) verwendet werden.

Als Bindemittelmaterialien sowie als Materialien der Partikel der ersten Füllstofffraktion können insbesondere auch die Materialien eingesetzt werden, die in der WO 95/26368, der EP 0 716 097 A1, der WO 01/27175 A1, der WO 03/080716 A1, der EP 1 207 180 A1 und der WO 2005/071000 A1 jeweils als Bindemittel bzw. Füllstoffe für aushärtbare Gießmassen empfohlen werden.

Der gemeinsame Anteil der ersten und der zweiten Füllstofffraktion an dem gesamten Füllstoffmaterial beträgt oft ca. 80 Gew.-% oder mehr, insbesondere auch ca. 90 Gew.-% oder mehr. Das Füllstoffmaterial kann auch im Wesentlichen vollständig aus der ersten und der zweiten Füllstofffraktion bestehen.

Wenn neben der ersten und der zweiten Füllstofffraktion weitere Füllstofffraktionen vorgesehen sind, können diese verschiedene Füllstoffmaterialien enthalten, mit denen spezielle Effekte erzielbar sind, beispielsweise Füllstoffmaterialien in Form von Fasern, Whiskern oder Nadeln.

Weiterhin betrifft die Erfindung eine Verwendung der erfindungsgemäßen Gießmasse zur Herstellung von Kunststoffformteilen für den Küchen- oder Sanitärbereich.

Besonders geeignet ist die erfindungsgemäße Gießmasse für die Herstellung von Küchenspülen und Arbeitsplatten für Küchen, da an diesen Bauteilen besonders häufig Verunreinigungen entstehen und ihre Reinigbarkeit daher von großer Bedeutung ist.

Schließlich betrifft die Erfindung auch Kunststoffformteile, welche unter Verwendung der erfindungsgemäßen Gießmasse hergestellt sind.

Diese und weitere Vorteile der vorliegenden Erfindung werden im Folgenden anhand der Beispiele noch näher erläutert.

Es wurde gefunden, dass bei der erfindungsgemäßen Verwendung formstabiler Mikrohohlkugeln die Verbesserung der Reinigbarkeit der Sichtseite mit einer Verringerung ihres Rauheitsprofils Rₜ von Spitze bis Tal korreliert. Daher ist im Folgenden das Rauheitsprofil Rₜ als Maß für die Reinigbarkeit angegeben.

### Vergleichsbeispiel 1

Es wird eine Gießmasse hergestellt, indem ein Bindemittelmaterial mit einem Füllstoffmaterial versetzt wird.

Das Bindemittelmaterial wird erhalten, indem in 8,0 kg Methylmethacrylat (MMA) zur Erhöhung der Viskosität 2,0 kg Polymethylmethacrylat (PMMA) im Molekulargewichtsbereich M_{w} von 50.000 bis 250.000 gelöst werden und dann 35 g Stearinsäure als Entformungshilfsmittel und 200 g Trimethylolpropantrimethacrylat (TRIM) als Vernetzer zugesetzt werden.

Das Füllstoffmaterial besteht aus verschiedenen Typen des granularen Quarzmaterials Granucol^{®} (Firma Gebrüder Dorfner GmbH & Co., Hirschau) sowie Wollastonit (Firma Quarzwerke GmbH, Frechen). Es wurden die folgenden Typen von Granucol^{®} und Wollastonit eingesetzt:
Granucol^{®} braun 10/8 (mittlere Partikelgröße = 570 µm)
Granucol^{®} erdbraun 4/8 (mittlere Partikelgröße = 570 µm)
Granucol^{®} weiß 1/8 (mittlere Partikelgröße = 570 µm)
Granucol^{®} weiß 2/9 (mittlere Partikelgröße = 330 µm)
Wollastonit (mittlere Nadellänge = 1 bis 25 µm)

Durch die Verwendung der verschiedenen Granucol^{®}-Typen, die insbesondere unterschiedlich gefärbt sind, kann eine ansprechende Granitdekor-Optik erzielt werden. Der Zusatz von Wollastonit verbessert die mechanischen Eigenschaften der mit der Gießmasse herstellbaren Formteile und verringert insbesondere das Auftreten sogenannter Auskocher auf den Formteilen, wie sie durch lokale Überhitzungen während des Härtungsprozesses auftreten können. Die Vorteile des Einsatzes von Wollastonit sind detailliert in der EP 1 207 180 A1 beschrieben.

Das Füllstoffmaterial wird dem Bindemittelmaterial zugegeben und mit diesem homogen vermischt.

Die Zusammensetzung der Gießmasse gemäß Vergleichsbeispiel 1 ist in Tabelle 1 wiedergegeben, wobei die Gehalte der einzelnen Komponenten in Gew.-% angegeben sind.

**Tabelle 1**

| | Vergleichsbeispiel 1 |
|---|---|
| Bindemittelmaterial | 27,6 |
| Wollastonit | 5,6 |
| Granucol^{®} braun 10/8 | 1,3 |
| Granucol^{®} erdbraun 4/8 | 6,4 |
| Granucol^{®} weiß 1/8 | 43,2 |
| Granucol^{®} weiß 2/9 | 15,9 |

Nach dem Zusatz von 80 g Lauroylperoxid und 40 g Di-(4-tert-butylcyclohexyl)peroxydicarbonat wird die Gießmasse in eine Gießform für eine Küchenspüle gegeben und unter Aushärtung polymerisiert. An einem aus der erhaltenen Küchenspüle entnommenen Probestück wird die Sichtseite auf ihr Rauheitsprofil von Spitze bis Tal Rₜ untersucht. Die Untersuchung wird mit einem Hommel-Messgerät T 2000 (Firma Hommel-Werke, Schwenningen) gemäß den Herstellerangaben zur Gerätebedienung durchgeführt.

Das Ergebnis der Untersuchung ist in Tabelle 2 angegeben.

**Tabelle 2**

| | Rauheitsprofil Rₜ von Spitze bis Tal [µm] |
|---|---|
| Vergleichsbeispiel 1 | 82 |

### Beispiele 1 bis 10

Es werden erfindungsgemäße Gießmassen hergestellt, die in ihrer Zusammensetzung der Gießmasse gemäß Vergleichsbeispiel 1 großenteils entsprechen, wobei jeweils unterschiedliche Mengen an keramischen formstabilen Mikrohohlkugeln ("E-SPHERES^{®}", erhältlich von der Firma C. A. Erbslöh, Krefeld) verschiedener Partikelgrößen im Austausch gegen entsprechende Mengen an Bindemittelmaterial bzw. Granucol^{®} zugesetzt werden. Der Wollastonit-Gehalt wird in allen Beispielen gleich gehalten. In den erhaltenen Gießmassen bilden die Granucol^{®}-Typen und Wollastonit eine erste Füllstofffraktion und die Mikrohohlkugeln eine zweite Füllstofffraktion. Es werden die folgenden Typen formstabiler Mikrohohlkugeln eingesetzt:
E-SPHERES^{®} SLG (mittlerer Durchmesser d50 = ca. 94 µm, spezifische Dichte = 0,6 bis 0,8 g/cm³)
E-SPHERES^{®} SL 150 (mittlerer Durchmesser d50 = ca. 68 µm, spezifische Dichte = 0,6 bis 0,8 g/cm³)
E-SPHERES^{®} SL 75 (mittlerer Durchmesser d50 = ca. 27 µm, spezifische Dichte = 0,6 bis 0,8 g/cm³)

Die Mikrohohlkugeln weisen jeweils eine geschäumte, poröse Strukur auf. Ihr eingeschlossenes Hohlraumvolumen beträgt ca. 67 Vol.-% des Kugelvolumens.

Die Zusammensetzungen der Gießmassen der Beispiele 1 bis 10 sind in Tabelle 3 angegeben, wobei die Gehalte der einzelnen Komponenten in Gew.-% angegeben sind.

**Tabelle 3**

| | Bsp. 1 | Bsp. 2 | Bsp. 3 | Bsp. 4 | Bsp. 5 | Bsp. 6 | Bsp. 7 | Bsp. 8 | Bsp. 9 | Bsp. 10 |
|---|---|---|---|---|---|---|---|---|---|---|
| Bindemittelmaterial | 25,1 | 25,1 | 25,1 | 25,1 | 25,1 | 25,1 | 25,1 | 25,1 | 25,1 | 25,1 |
| Wollastonit | 5,6 | 5,6 | 5,6 | 5,6 | 5,6 | 5,6 | 5,6 | 5,6 | 5,6 | 5,6 |
| Granucol^{®} braun 10/8 | 1,3 | 1,3 | 1,3 | 1,3 | 1,3 | 1,3 | 1,3 | 1,3 | 1,3 | 1,3 |
| Granucol^{®} erdbraun 4/8 | 6,4 | 6,4 | 6,4 | 6,4 | 6,4 | 6,4 | 6,4 | 6,4 | 6,4 | 6,4 |
| Granucol^{®} weiß 1/8 | 43,2 | 43,2 | 43,2 | 43,2 | 43,2 | 43,2 | 43,2 | 43,2 | 43,2 | 43,2 |
| Granucol^{®} weiß 2/9 | 17,6 | 16,8 | 15,9 | 13,5 | 8,4 | 3,4 | 15,9 | 8,4 | 15,9 | 8,4 |
| E-SPHERES^{®} SLG | 0,8 | 1,6 | 2,5 | 4,9 | 10,0 | 15,0 | - | - | - | - |
| E-SPHERES^{®} SL 150 | - | - | - | - | - | - | 2,5 | 10,0 | - | - |
| E-SPHERES^{®} SL 75 | - | - | - | - | - | - | - | - | 2,5 | 10,0 |

Für ausgewählte Beispiele ist in Tabelle 4 gezeigt, welchen Anteilen in Vol.-% die in Tabelle 3 angegebenen Anteile der Mikrohohlkugeln in Gew.-% entsprechen.

**Tabelle 4**

| | Beispiel 1 | Beispiel 4 | Beispiel 5 | Beispiel 6 |
|---|---|---|---|---|
| Anteil E-SPHERES^{®} SLG [Gew.-%] | 0,8 | 4,9 | 10,0 | 15,0 |
| Anteil E-SPHERES^{®} SLG [vol.-%] | 1,0 | 6,1 | 12,5 | 18,8 |

Wie für die Gießmasse gemäß Vergleichsbeispiel 1 beschrieben, wird mit jeder der hergestellten Gießmassen jeweils eine Küchenspüle hergestellt und anschließend ein Probestück der Küchenspüle auf das Rauheitsprofil Rₜ seiner Sichtseite untersucht. Die Ergebnisse sind in Tabelle 5 angegeben.

**Tabelle 5**

| | Rauheitsprofil Rₜ von Spitze bis Tal [µm] |
|---|---|
| Beispiel 1 | 69 |
| Beispiel 2 | 64 |
| Beispiel 3 | 59 |
| Beispiel 4 | 46 |
| Beispiel 5 | 37 |
| Beispiel 6 | 33 |
| Beispiel 7 | 58 |
| Beispiel 8 | 31 |
| Beispiel 9 | 46 |
| Beispiel 10 | 23 |

Die Ergebnisse zeigen, dass der Zusatz jeder der verwendeten Sorten formstabiler Mikrohohlkugeln eine deutliche Verminderung des Rauheitsprofils Rₜ bewirkt. Während beispielsweise mit der Zusammensetzung gemäß Vergleichsbeispiel 1 ein Rauheitsprofil Rₜ von 82 µm erhalten wird, beträgt das Rauheitsprofil Rₜ bei einer Verwendung der Zusammensetzung gemäß Beispiel 10 mit einem Gehalt an E-SPHERES^{®} SL 75 von 10,0 Gew.-% nur noch 23 µm.

Mit fortschreitendem Gehalt der Gießmasse an Mikrohohlkugeln verbessert sich die Reinigbarkeit der Sichtseite. Es werden allerdings bereits bei so niedrigen Konzentrationen der formstabilen Mikrohohlkugeln in der Gießmasse wie 0,8 Gew.-% (1,0 Vol.-%, Beispiel 1) merkliche Verbesserungen erzielt.

Sämtliche mit erfindungsgemäßen Gießmassen erhaltenen Küchenspülen weisen im Vergleich zu der im Vergleichsbeispiel erhaltenen Gießmasse keinerlei Beeinträchtigungen in ihrer Granitdekor-Optik auf.

### Vergleichsbeispiel 2

Es wird eine Gießmasse hergestellt, die in ihrer Zusammensetzung der Gießmasse gemäß Vergleichsbeispiel 1 großenteils entspricht, wobei 15,0 Gew.-% massiver Mikrokugeln aus Glas ("BALLOTINI^{®} B 70 B", Firma Eisenwerk Würth, Bad Friedrichshall, mittlerer Durchmesser d50 = ca. 92 µm, spezifische Dichte = 2,45 g/cm³) im Austausch gegen 2,5 Gew.-% Bindemittelmaterial und 12,5 Gew.-% Granucol^{®} weiß 2/9 zugesetzt werden.

Die Zusammensetzung der Gießmasse des Vergleichsbeispiels 2 ist in Tabelle 6 angegeben, wobei die Gehalte der einzelnen Komponenten in Gew.-% angegeben sind. Der Volumenanteil der massiven Mikrohohlkugeln beträgt 6,1 Vol.-%.

**Tabelle 6**

| | Vgl.-Bsp. 2 |
|---|---|
| Bindemittelmaterial | 25,1 |
| Wollastonit | 5,6 |
| Granucol^{®} braun 10/8 | 1,3 |
| Granucol^{®} erdbraun 4/8 | 6,4 |
| Granucol^{®} weiß 1/8 | 43,2 |
| Granucol^{®} weiß 2/9 | 3,4 |
| BALLOTINI^{®} B 70 B | 15,0 |

Aus der Gießmasse wurde eine Küchenspüle hergestellt, und anschließend wurde ein Probestück der Küchenspüle auf seine Oberflächeneigenschaften untersucht, wie bei Vergleichsbeispiel 1 beschrieben. Das Ergebnis ist in Tabelle 7 angegeben.

**Tabelle 7**

| | Rauheitsprofil Rₜ von Spitze bis Tal [µm] |
|---|---|
| Vgl.-Bsp. 2 | 50 |

Gemäß diesen Ergebnissen wird durch einen Zusatz massiver Mikrokugeln aus Glas eine geringere Reduzierung des Rauheitsprofils an der Sichtseite eines Kunststoffformteils erzielt als bei einer Verwendung eines gleichen Anteils formstabiler Mikrohohlkugeln. Dies zeigt ein Vergleich der Ergebnisse, die mit den massiven Mikrokugeln BALLOTINI^{®} B 70 B erhalten werden, mit den Resultaten, die unter Verwendung der Mikrohohlkugeln E-SPHERES^{®} SLG mit einem nahezu gleichen mittleren Durchmesser erzielt werden. Während mit der Gießmasse gemäß Bsp. 4 mit einem Gehalt an E-SPHERES^{®} SLG von 4,9 Gew.-% (6,1 Vol.-%) ein Rauheitsprofil Rₜ von 46 µm erhalten wird, beträgt das Rauheitsprofil Rₜ bei Verwendung der Gießmasse gemäß Vgl.-Bsp. 2, welche den gleichen Volumenanteil von 6,1 Vol.-% an massiven Mikrokugeln aufweist, 50 µm.

Der Effekt der Verbesserung der Reinigbarkeit der Sichtseite tritt somit bei dem erfindungsgemäßen Einsatz formstabiler Mikrohohlkugeln gegenüber der Verwendung massiver Mikrokugeln deutlich verstärkt auf.

## Patentansprüche

1. Aushärtbare Gießmasse zur Herstellung von Kunststoffformteilen, umfassend ein Bindemittelmaterial und ein Füllstoffmaterial, wobei das Füllstoffmaterial an der Gießmasse einen Anteil von ca. 40 bis ca. 85 Gew.-% aufweist und zwei oder mehr Füllstofffraktionen umfasst, wobei eine erste Füllstofffraktion aus massiven granularen mineralischen Partikeln besteht und eine zweite Füllstofffraktion aus formstabilen Mikrohohlkugeln aus einem Silikatmaterial besteht, und wobei der Anteil der zweiten Füllstofffraktion an der Gießmasse ca. 1 Vol.-% oder mehr beträgt.

2. Gießmasse nach Anspruch 1, **dadurch gekennzeichnet, dass** der Anteil der zweiten Füllstofffraktion an der Gießmasse ca. 5 Vol.-% oder mehr beträgt.

3. Gießmasse nach Anspruch 1 oder 2, **dadurch gekennzeichnet, dass** der Anteil der zweiten Füllstofffraktion an der Gießmasse ca. 30 Vol.-% oder weniger beträgt.

4. Gießmasse nach einem der voranstehenden Ansprüche, **dadurch gekennzeichnet, dass** der mittlere Durchmesser der Mikrohohlkugeln ca. 5 bis ca. 30 % der mittleren Partikelgröße der Partikel der ersten Füllstofffraktion beträgt.

5. Gießmasse nach einem der voranstehenden Ansprüche, **dadurch gekennzeichnet, dass** die Partikel der ersten Füllstofffraktion eine mittlere Partikelgröße von ca. 50 bis ca. 1.000 µm aufweisen.

6. Gießmasse nach einem der voranstehenden Ansprüche, **dadurch gekennzeichnet, dass** die Mikrohohlkugeln einen mittleren Durchmesser von ca. 300 µm oder weniger aufweisen.

7. Gießmasse nach einem der voranstehenden Ansprüche, **dadurch gekennzeichnet, dass** die Mikrohohlkugeln einen mittleren Durchmesser von ca. 5 µm oder mehr aufweisen.

8. Gießmasse nach Anspruch 7, **dadurch gekennzeichnet, dass** die Mikrohohlkugeln einen mittleren Durchmesser von ca. 25 bis ca. 150 µm, vorzugsweise von ca. 50 bis ca. 100 µm, aufweisen.

9. Gießmasse nach einem der voranstehenden Ansprüche, **dadurch gekennzeichnet, dass** die spezifische Dichte der Mikrohohlkugeln von ca. 0,5 bis ca. 1 g/cm³ beträgt.

10. Gießmasse nach einem der voranstehenden Ansprüche, **dadurch gekennzeichnet, dass** die Mikrohohlkugeln ein eingeschlossenes Hohlraumvolumen von ca. 20 Vol.-% des Kugelvolumens oder mehr aufweisen.

11. Gießmasse nach einem der voranstehenden Ansprüche, **dadurch gekennzeichnet, dass** das Bindemittelmaterial eine flüssige monomere Acrylatkomponente umfasst.

12. Gießmasse nach einem der voranstehenden Ansprüche, **dadurch gekennzeichnet, dass** ein Material der Partikel der ersten Füllstofffraktion ausgewählt ist aus silikatischen Füllstoffmaterialien und Aluminiumhydroxid-basierenden Füllstoffmaterialien.

13. Verwendung der Gießmasse gemäß einem der Ansprüche 1 bis 12 zur Herstellung von Kunststoffformteilen für den Küchen- oder Sanitärbereich, insbesondere von Küchenspülen und Arbeitsplatten für Küchen.

14. Kunststoffformteile, hergestellt unter Verwendung der Gießmasse gemäß einem der Ansprüche 1 bis 12.

## Claims

1. Curable casting compound for manufacturing plastic moulded parts, comprising a binder material and a filler material, wherein the filler material content of the casting compound is ca. 40 to ca. 85% by weight and comprises two or more filler fractions, wherein a first filler fraction consists of solid granular mineral particles and a second filler fraction consists of dimensionally stable hollow microbeads of a silicate material, and wherein the second filler fraction content of the casting compound is ca. 1% by volume or more.

2. Casting compound according to claim 1, **characterized in that** the second filler fraction content of the casting compound is ca. 5% by volume or more.

3. Casting compound according to claim 1 or 2, **characterized in that** the second filler fraction content of the casting compound is ca. 30% by volume or less.

4. Casting compound according to one of the preceding claims, **characterized in that** the mean diameter of the hollow microbeads is ca. 5 to ca. 30 % of the mean particle size of the particles of the first filler fraction.

5. Casting compound according to one of the preceding claims, **characterized in that** the particles of the first filler fraction have a mean particle size of ca. 50 to ca. 1000 µm.

6. Casting compound according to one of the preceding claims, **characterized in that** the hollow microbeads have a mean diameter of ca. 300 µm or less.

7. Casting compound according to one of the preceding claims, **characterized in that** the hollow microbeads have a mean diameter of ca. 5 µm or more.

8. Casting compound according to claim 7, **characterized in that** the hollow microbeads have a mean diameter of ca. 25 to ca. 150 µm, preferably of ca. 50 to ca. 100 µm.

9. Casting compound according to one of the preceding claims, **characterized in that** the specific density of the hollow microbeads is from ca. 0.5 to ca. 1 g/cm³.

10. Casting compound according to one of the preceding claims, **characterized in that** the hollow microbeads have an enclosed hollow space volume of ca. 20% by volume of the bead volume or more.

11. Casting compound according to one of the preceding claims, **characterized in that** the binder material comprises a liquid acrylic monomer component.

12. Casting compound according to one of the preceding claims, **characterized in that** a material of the particles of the first filler fraction is selected from silicate filler materials and aluminium-hydroxide-based filler materials.

13. Use of the casting compound according to one of claims 1 to 12 to manufacture plastic moulded parts for the kitchen- or sanitary sector, in particular kitchen sinks and worktops for kitchens.

14. Plastic moulded parts, manufactured using the casting compound according to one of claims 1 to 12.

## Revendications

1. Masse de coulée durcissable pour la production de pièces moulées en matière synthétique comprenant une matière de liant et une matière de charge, où la matière de charge présente une contribution à la masse de coulée d'environ 40 à environ 85 % en poids et comprend deux ou plusieurs fractions de charge, où une première fraction de charge consiste en particules minérales granulaires massives et une seconde fraction de charge consiste en microsphères creuses indéformables en une matière silicate, et où la contribution de la seconde fraction de charge à la masse de coulée est d'environ 1 % en volume ou plus.

2. Masse de coulée selon la revendication 1 **caractérisée en ce que** la contribution de la seconde fraction de charge à la masse de coulée est d'environ 5 % en volume ou plus.

3. Masse de coulée selon la revendication 1 ou 2 **caractérisée en ce que** la contribution de la seconde fraction de charge à la masse de coulée est d'environ 30 % en volume ou moins.

4. Masse de coulée selon l'une des revendications précédentes **caractérisée en ce que** le diamètre moyen des microsphères creuses est d'environ 5 à environ 30 % de la taille de particule moyenne des particules de la première fraction de charge.

5. Masse de coulée selon l'une des revendications précédentes **caractérisée en ce que** les particules de la première fraction de charge présentent une taille de particule moyenne d'environ 50 à environ 1000 µm.

6. Masse de coulée selon l'une des revendications précédentes **caractérisée en ce que** les microsphères creuses présentent un diamètre moyen d'environ 300 µm ou moins.

7. Masse de coulée selon l'une des revendications précédentes **caractérisée en ce que** les microsphères creuses présentent un diamètre moyen d'environ 5 µm ou plus.

8. Masse de coulée selon la revendication 7 **caractérisée en ce que** les microsphères creuses présentent un diamètre moyen d'environ 25 à environ 150 µm, de préférence d'environ 50 à environ 100 µm.

9. Masse de coulée selon l'une des revendications précédentes **caractérisée en ce que** la masse volumique des microsphères creuses est d'environ 0,5 à environ 1 g/cm³.

10. Masse de coulée selon l'une des revendications précédentes **caractérisée en ce que** les microsphères creuses présentent un volume de vide inclus d'environ 20 % en volume du volume des sphères ou plus.

11. Masse de coulée selon l'une des revendications précédentes **caractérisée en ce que** la matière de liant comprend un composant acrylate monomère liquide.

12. Masse de coulée selon l'une des revendications précédentes **caractérisée en ce qu'**une matière des particules de la première fraction de charge est choisie parmi les matières de charge silicatiques et les matières de charge à base d'hydroxyde d'aluminium.

13. Utilisation de la masse de coulée selon l'une des revendications 1 à 12 pour la production de pièces moulées en matière synthétique pour le domaine de la cuisine ou sanitaire, en particulier des éviers de cuisine et des plans de travail pour cuisines.

14. Pièces moulées en matière synthétique produites au moyen de la masse de coulée selon l'une des revendications 1 à 12.
